# EUROPEAN PATENT APPLICATION

(11) **EP 3 797 958 A1**
(43) Date of publication of application: **31.03.2021**
(21) Application number: 19706354.8
(22) Date of filing: 27.02.2019
(51) Int. Cl.: B29C 33/08, H05B 6/80

(54) **MOLDING DEVICE, MOLD, AND MOLDED PRODUCT MANUFACTURING METHOD**

(30) Priority: 21.05.2018 JP 2018097376; 26.12.2018 JP 2018242092
(71) Applicant: Microwave Chemical Co., Ltd., Osaka-shi, Osaka 559-0025 (JP)
(72) Inventor: TSUKAHARA, Yasunori, Osaka 5590025 (JP); KAIHARA, Kanako, Osaka 5590025 (JP); KINJYO, Ryuhei, Osaka 5590025 (JP)
(74) Representative: Betten & Resch
(86) International application number: PCT/JP2019/007669
(87) International publication number: WO 2019/225105

(57) **Abstract**

A molding apparatus is provided that can appropriately mold a molding material to which microwaves have been applied using a mold. The molding apparatus includes: a mold 10 including a first mold member 11 and a second mold member 12 that form a molding cavity 100, the first mold member 11 including communication holes 111 that bring the outside of the mold 10 and the cavity 100 into communication with each other; coaxial cables 20 for transmitting microwaves, first ends 20a of the coaxial cables 20 being attached to the communication holes 111; and a microwave application unit 30 for applying microwaves into the cavity 100 via the coaxial cables 20, the microwave application unit 30 being connected to second end portions 20b of the coaxial cables 20.

## Description

### Technical field

The present invention relates to, for example, a molding apparatus with a mold.

### Background Art

Conventionally, there are methods for molding resin, such as press molding, which is performed by supplying a material made of a mixture of graphite powder and a polymer compound to a mold, and injection molding, which is performed by melting a material, such as resin, and supplying the molten material from an injector into a mold. In press molding, resin is heated in advance to a temperature at which the resin can be deformed, and is pressed and molded using a mold. However, the material gradually cools and hardens and it is then difficult to mold the material into a desired shape. Since there is a concern that the quality of material will deteriorate if the material is unnecessarily heated in advance, molding accuracy is enhanced by increasing the pressing pressure, whereas there is a problem in that the size and weight of the mold and a mechanism for driving the mold increase because a high pressure needs to be generated.

To address this, there is a manufacturing method in which a material itself, in a state of being placed on an opened mold, is heated using microwaves, and the mold is then closed to mold the material into a predetermined shape (e.g. see Patent Document 1).

### Citation List

### Patent Document

Patent Document 1: JP 2003-168444A (page 1, FIG. 4 etc.)

### Disclosure of Invention

### Problem to be Solved by the Invention

However, the aforementioned technique using microwaves also has the following problems, and molding cannot necessarily be performed accurately and efficiently.

For example, in the aforementioned technique, a microwave heating apparatus is moved to the upper side of a mold in an open state, microwaves are applied to a molding material, which has been supplied onto the open mold, to heat the material, and the mold is closed to mold the material after the microwave heating apparatus has been moved from the upper side of the mold. Thus, a step of moving the microwave heating apparatus to the upper side of the mold and a step of moving the apparatus from the upper side of the mold need to be performed, requiring a mechanism or the like for moving the microwave heating apparatus. As a result, there is a problem in that the entire apparatus becomes complicated, and molding cannot be performed with a simple configuration. In addition, the time to move the microwave heating apparatus is needed, resulting in deterioration of operation efficiency, which is also a problem.

Moreover, after applying microwaves to the molding material to heat the material, the microwave heating apparatus is moved and the mold is closed to mold the material. The temperature of the molding material that has been heated with microwaves decreases before the mold is closed, as in the conventional technique, due to, for example, a time difference between the microwave heating step and the mold closing step that is caused by the movement. It is therefore difficult to adjust the temperature during molding. In the case of, for example, molding a molding material for which temperature adjustment during the molding is important, it is difficult to obtain a molded piece of favorable quality.

The present invention has been made to solve the foregoing problems, and aims to provide a molding apparatus and a method for manufacturing a molded piece that enable a resin-based material to be accurately and efficiently molded using a mold.

### Means for Solving the Problems

A molding apparatus according to the present invention includes: a mold including multiple mold members that form a cavity for molding, the mold having multiple communication holes that bring outside of the mold and the cavity into communication with each other; multiple variable transmission units for transmitting microwaves, first end portions of the multiple variable transmission units being attached to the multiple communication holes in one-to-one correspondence; and a microwave application unit for applying microwaves into the cavity via the multiple variable transmission units, the microwave application unit being connected to second end portions of the multiple variable transmission units.

This configuration makes it possible to accurately and efficiently mold a resin-based molding material to which microwaves have been applied. In addition, the pressure to be applied to the mold can be reduced compared with the conventional technique. For example, if molding is performed so as to spread the material over the entire mold while directly heating the material through microwave application by providing the application unit at a position at which the material within the cavity is likely to harden, and/or providing the application unit so as to make uniform the intensity distribution of microwaves within the cavity, the molding material can be prevented from hardening after being heated through microwave application due to the time required to move a microwave heating apparatus or the heated molding material, as with the conventional technique. Furthermore, since the shape of transmission paths is variable due to the variable transmission units, the mold members can be moved with the variable transmission units attached thereto, and molding that requires movement of the mold members can be readily performed.

A molding apparatus according to the present invention is the above-described molding apparatus in which the microwave application unit applies microwaves to a molding material arranged within the cavity.

This configuration makes it possible to perform molding while applying microwaves to the molding material.

A molding apparatus according to the present invention is the above-described molding apparatus in which a molding material arranged within the cavity is a solid or liquid molding material, and the microwave application unit heats the molding material by applying microwaves thereto.

This configuration makes it possible to perform molding while applying microwaves to the molding material to heat the molding material.

A molding apparatus according to the present invention is the above-described molding apparatus in which the microwave application unit applies microwaves into the cavity via each of the multiple variable transmission units such that microwaves within the cavity has a desired intensity distribution.

This configuration makes it possible to perform molding while applying microwaves so as to achieve a desired intensity distribution, and provide a good-quality molded piece.

A molding apparatus according to the present invention is the above-described molding apparatus in which the microwave application unit controls a phase of microwaves to be applied via each of the multiple variable transmission units.

This configuration makes it possible to control the phase to, for example, cause an electric field and/or a magnetic field to concentrate in a desired portion utilizing microwaves, and make uniform the electric field distribution and/or the magnetic field distribution in a desired area. Thus, microwaves can be applied in the most suitable manner for the shape and size of a molded piece.

A molding apparatus according to the present invention is the above-described molding apparatus in which the microwave application unit applies microwaves with different frequencies.

This configuration makes it possible to, for example, apply microwaves with a frequency that increases the dielectric loss, without changing the mold, and apply microwaves in the most suitable manner for a molded piece that is to be molded.

A molding apparatus according to the present invention is the above-described molding apparatus in which the microwave application unit applies microwaves in different forms of output via the multiple variable transmission units.

This configuration makes it possible to change the form of output to change the distribution of the electric field intensity and/or the magnetic field intensity of microwaves, and apply microwaves in the most suitable manner for a molded piece that is to be molded.

A molding apparatus according the present invention is the above-described molding apparatus in which the microwave application unit applies microwaves via the multiple variable transmission units for different periods.

This configuration makes it possible to change the microwave application period to change the degree of microwave application between different positions within the cavity, and apply microwaves in the most suitable manner for a molded piece that is to be molded.

A molding apparatus according to the present invention is the above-described molding apparatus in which the multiple mold members include a movable mold and a stationary mold, and the communication holes are provided in the movable mold.

With this configuration, the communication holes are located at portions that are usually on the back side of a molded piece, and thus, the influence of the communication holes exerted on an outer appearance of the molded piece can be reduced. In addition, as a result of providing the communication holes in the movable mold, which is relatively lightweight and thin, the mold can also be processed more readily than in the case of providing the communication holes in the stationary mold.

A molding apparatus according to the present invention is the above-described molding apparatus in which each of the multiple mold members has a shape that does not allow microwaves applied into the cavity to leak out of the mold when microwaves are applied.

This configuration makes it possible to prevent microwaves from leaking out of the mold when microwaves are applied.

A molding apparatus according to the present invention is the above-described molding apparatus in which the microwave application unit has a semiconductor oscillator or an injection locked oscillator.

This configuration makes it possible to control the phase of microwaves.

A molding apparatus according to the present invention is the above-described molding apparatus in which the variable transmission units are coaxial cables or variable waveguides.

This configuration makes it possible to move the mold members with the coaxial cables or the variable waveguides attached thereto as a result of the coaxial cables being bent, or the variable waveguides being bent, stretched, and/or contracted, and thus, molding that requires movement of the mold members can be performed.

A molding apparatus according to the present invention is the above-described molding apparatus in which the variable transmission units are flexible waveguides or sliding waveguides.

This configuration makes it possible to move the mold members with the flexible waveguides or the sliding waveguides attached thereto as a result of the flexible waveguides bending, or the sliding waveguides sliding to stretch or contract, and molding that requires movement of the mold members can be performed.

A molding apparatus according to the present invention is the above-described molding apparatus in which the mold is a mold for press molding.

This configuration makes it possible to efficiently apply microwaves to a molding material by applying the most suitable microwaves during the process of bringing the mold members close to each other, in accordance with the distance between the mold members.

A mold according to the present invention is a mold that includes multiple mold members that form a cavity for molding, the mold including: multiple communication holes for bringing outside of the mold and the cavity into communication with each other, multiple variable transmission units for applying microwaves into the cavity being to be attached, in one-to-one correspondence, to the multiple communication holes.

This configuration makes it possible to appropriately mold a molding material to which microwaves have been applied. In addition, microwaves can be applied using the variable transmission units, and for example, microwaves with different frequencies can be applied into the cavity 100, using one mold.

A mold according to the present invention is the above-described mold in which the variable transmission units to be attached to the communication holes are variable transmission units for applying microwaves to a molding material that is arranged within the cavity.

This configuration makes it possible to apply microwaves to the molding material, and enables molding utilizing microwave application.

A method for manufacturing a molded piece according to the present invention includes: a step of arranging a molding material within a cavity for molding in a mold having multiple communication holes that bring outside of the mold and the cavity into communication with each other, the mold including multiple mold members that form the cavity; and a step of applying microwaves to a molding material arranged within the cavity in the mold, via multiple variable transmission units that are attached, in one-to-one correspondence, to the multiple communication holes in the mold.

This configuration makes it possible to appropriately mold a molding material to which microwaves have been applied. In addition, microwaves can be applied using the variable transmission units, and for example, microwaves with different frequencies can be applied into the cavity 100, using one mold.

### Effect of the Invention

According to the present invention, a molding material to which microwaves have been applied can be appropriately molded using a mold.

### Brief Description of the Drawings

FIG. 1 shows a perspective view (FIG. 1A) and a cross-sectional view (FIG. 1B) of a molding apparatus according to Embodiment 1.
FIG. 2 shows cross-sectional views (FIGS. 2A to 2D) illustrating a method for manufacturing a molded piece using the molding apparatus.
FIG. 3 is a cross-sectional view of a molding apparatus according to Embodiment 2.
FIG. 4 shows cross-sectional views (FIGS. 4A to 4D) illustrating a method for manufacturing a molded piece using the molding apparatus.
FIG. 5 shows a first example (FIG. 5A) and a second example (FIG. 5B) of a molding apparatus according to Embodiment 3.

### Best Mode for Carrying Out the Invention

Embodiments of a molding apparatus or the like will be described hereinafter with reference to the drawings. Note that constituent elements with the same reference numerals perform similar operations in the embodiments, and redundant descriptions are omitted accordingly in some cases.

### Embodiment 1

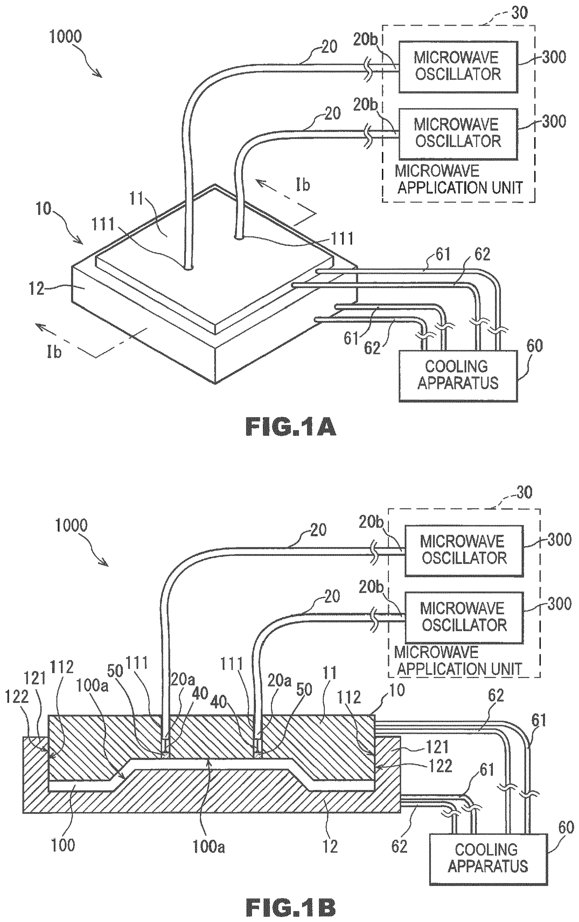

FIG. 1 shows a perspective view (FIG. 1A) of a molding apparatus according to the present embodiment, and a cross-sectional view (FIG. 1B) taken along a line Ib-Ib in FIG. 1A. Here, a state where a mold in the molding apparatus is closed is shown.

In the present embodiment, a description will be given while taking, as an example, a case where a molding apparatus 1000 is a vertical press molding apparatus.

The molding apparatus 1000 includes a mold 10, two coaxial cables 20, each serving as a variable transmission unit, a microwave application unit 30, and a cooling apparatus 60. The microwave application unit 30 has two microwave oscillators 300. The mold 10 includes a first mold member 11 and a second mold member 12.

The first mold member 11 and the second mold member 12 are molds that form a molding cavity 100. For example, the molding cavity 100 is formed between the first mold member 11 and the second mold member 12 in a state where the mold 10 is closed. The state where the mold 10 is closed may also be considered to be, for example, a state where the mold 10 is clamped, a state where the first mold member 11 and the second mold member 12 that constitute the mold 10 are arranged in a positional relationship in which final molding is to be performed, a state where the first mold member 11 and the second mold member 12 have been brought closest to each other to perform molding, and a state where the first mold member 11 and the second mold member 12 are fitted to each other. The cavity 100 is a space or a void for molding that is formed between the first mold member 11 and the second mold member 12. The molding cavity 100 is a cavity whose shape corresponds to an outer shape of a molded piece. The cavity 100 may have any shape, size, and the like. Usually, the cavity 100 is formed in a portion across which the first mold member 11 and the second mold member 12 oppose each other. Here, faces of the first mold member 11 and the second mold member 12 on the cavity 100 side are called inner faces 100a facing the cavity 100. A molding material comes into contact with the inner faces 100a facing the molding cavity 100 during molding, for example. The molding material is a material to be molded, for example. Note that the cavity 100 usually refers to a space or the like within the mold 10 in a closed state, but a space sandwiched by the inner faces 100a facing the cavity, or the like, immediately before the mold is closed (e.g. a space that is present within the mold 10 when microwaves are applied before the mold 10 is closed), for example, is also called the cavity 100 in some cases for convenience of description.

A description is given here of a case where the first mold member 11 is a movable mold member, which is a so-called movable mold, and the second mold member 12 is a stationary mold member, which is a so-called stationary mold. Since the molding apparatus 1000 is a vertical molding apparatus, the first mold member 11 and the second mold member 12 of the mold 10 are arranged vertically, and the cavity 100 is formed between a lower face of the first mold member 11 and an upper face of the second mold member 12. For example, the first mold member 11 is attached to a so-called clamping apparatus (not shown), such as a hydraulic driving unit, directly or indirectly via a detachable movable plate, a clamping plate, or the like, so as to be located above the second mold member 12. The first mold member 11 can be moved in the vertical direction, i.e. in a direction approaching the second mold member 12 and a direction moving away from the second mold member 12, by operating the clamping apparatus. However, the unit for moving the first mold member 11 is not limited to the clamping apparatus. A guide rod (not shown), a tie bar (not shown), or the like for restricting the moving direction may also be attached, directly or indirectly, to the first mold member 11. In the following description, there are cases where movement of the first mold member 11 in the direction approaching the second mold member 12 is called movement in a direction closing the mold, and movement of the first mold member 11 in a direction moving away from the second mold member 12 is called movement in a direction opening the mold.

Note that either the first mold member 11 or the second mold member 12 may be movable as long as at least one of the first mold member 11 and the second mold member 12 is movable such that the first and second mold members can move close to each other and away from each other. For example, both the first mold member 11 and the second mold member 12 may be movable. Also, for example, the moving direction or the like of the first mold member 11 and the second mold member 12 may be any direction or the like, and the first mold member 11 and the second mold member 12 may be arranged in any positional relationship.

A material that can be used in an ordinary mold, such as metal or ceramic, is used as the material of the first mold member 11 and the second mold member 12. Note that it is preferable to use a material that is highly reflective of microwaves, such as metal, as the material of the first mold member 11 and the second mold member 12. As a result of using such a material, it is possible to efficiently use microwaves and reduce leakage of microwaves out of the cavity 100 by causing microwaves applied into the cavity 100 to be reflected within the cavity 100 to trap the microwaves within the cavity 100. Note that, in the case where at least one of the first mold member 11 and the second mold member 12 is to be heated with microwaves applied into the cavity 100, the material of at least one of the first mold member 11 and the second mold member 12 on the cavity 100 side may be a heat-resistant dielectric with high dielectric loss.

Note that it is preferable that the first mold member 11 and the second mold member 12 have shapes that do not allow microwaves applied into the cavity 100 to leak out of the mold 10 from the cavity 100 during the microwave application. For example, it is preferable that, when microwaves are applied, the gap between the first mold member 11 and the second mold member 12 excluding the cavity 100 has a size that does not allow the microwaves to leak. For example, in the case of applying microwaves into the cavity 100 in a state before the first mold member 11 and the second mold member 12 are closed (e.g. in a state where the first mold member 11 and the second mold member 12 are more distant from each other than when molding is being performed), it is preferable that, in this state, the entire gap between the first mold member 11 and the second mold member 12 excluding the cavity 100 has a size that does not allow the microwaves to leak. Also, for example, in the case of applying microwaves into the cavity 100 in a state where the first mold member 11 and the second mold member 12 are closed completely, it is preferable that, in this state, the entire gap between the first mold member 11 and the second mold member 12 excluding the cavity 100 has a size that does not allow the microwaves to leak.

It is assumed here, as an example, that a side wall 121 is provided over the entire edge portion of the second mold member 12 so as to extend parallel to the direction in which the first mold member 11 moves and to protrude toward the first mold member 11 side, a portion of the first mold member 11 on the second mold member 12 side has a shape that allows this portion to be fitted to the inside of the side wall 121, and a gap between an inner side face 122 of the side wall 121 of the second mold member 12 and a side face 112 of the portion of the first mold member 11 to be fitted to the inside of the side wall 121, the side face 112 opposing the inner side face 122, has a size that does not allow microwaves to leak when the microwaves are applied immediately before the mold is closed. Note that, for example, a configuration may alternatively be employed in which a side wall that protrudes toward the second mold member 12 side, similarly to the side wall 121, is provided over the entire edge portion of the first mold member 11, a portion of the second mold member 12 on the first mold member 11 side has a shape that allows this portion to be fitted to the inside of the side wall of the first mold member 11, and a gap between an inner side face of the side wall of the first mold member 11 and a side face of the portion of the second mold member 12 to be fitted to the inside of the side wall, the side face opposing the inner side face of the side wall of the first mold member 11, has a size that does not allow microwaves to leak when the microwaves are applied. Note that the edge portion of the second mold member 12 refers to an outer peripheral portion and a portion therearound of the second mold member 12 in the case where the direction in which the first mold member 11 moves is an axial direction, for example.

The molding material that is to be arranged within the cavity 100 may also be considered to be, for example, a material for manufacturing a molded piece. For example, the molding material is a resin, a raw material of a resin, or the like. The resin mentioned here is a thermoplastic resin. That is, the resin mentioned here is a thermoplastic resin, such as polyethylene, polystylene, polypropylene, polyamide, or polybutylene terephthalate. The molding material may also be a combination of two or more of these resins. Also, the molding material may be a resin compound containing any of these resins, and a filler that is made of a fiber such as glass fiber, carbon fiber, or vegetable fiber, calcium carbonate powder, graphite powder, metal powder, or the like, or a thickener that is made of silica gel or the like. Note that the molding material may also be a resin compound that foams during molding, or may also be a resin compound containing a foaming agent and a resin that foams as a result of the foaming agent being added thereto. The molding material is supplied in the form of a liquid, a paste, a fluid (e.g. a highly viscous fluid), powder, pellets, a sheet, or bulk, for example, into the cavity 100.

The first mold member 11 is provided with two communication holes 111, which bring the outside of the mold 10 and the inner face 100a facing the cavity 100 into communication with each other. The outside of the mold 10 may also be considered to be, for example, the outer side of the mold 10, the outside of a mold member in which the communication holes 111 are provided (here, the first mold member 11), and the like. It is preferable that each of the communication holes 111 is a hole having a shape whose axial direction extends straight, but the axial direction may curve. It is preferable that a cross section perpendicular to the axial direction of each communication hole 111 has a round shape, but may have a shape other than a round shape (e.g. a polygonal shape etc.). The thickness of each communication hole 111 may be fixed, but does not need to be fixed. For example, the thickness of each communication hole 111 may change, continuously or stepwise, from the external side of the mold 10 toward the inner face 100a facing the cavity 100. For example, the thickness of each communication hole 111 may increase, continuously or stepwise, toward the inner face 100a. A description is given here while taking, as an example, a case where the two communication holes 111 are arranged at positions that are point symmetric with respect to the center of the inner face 100a facing the cavity 100 of the first mold member 11. However, the arrangement of the communication holes 111 is not limited thereto.

First end portions 20a of the coaxial cables 20 are attached, in one-to-one correspondence, to the communication holes 111 provided in the mold 10. Here, a portion of each coaxial cable 20 on the first end portion 20a side is inserted in a corresponding communication hole 111 from the outer side of the mold 10. The first end portions 20a of the coaxial cables 20 are arranged within the communication holes 111 so as not to reach the side on which the inner face 100a facing the cavity 100 is provided. The communication holes 111 may also be considered to be, for example, holes to which the coaxial cables 20 for applying microwaves into the cavity 100 are attached, for example.

Plug-like members 50, which are permeable to microwaves, are fitted into the communication holes 111 on the side on which the inner face 100a facing the cavity 100 is located. It is preferable that the surface shape of the plug-like members 50 on the cavity 100 side is a shape that forms the same face as the inner face 100a facing the cavity 100 surrounding the plug-like members 50. The plug-like members 50 prevent the molding material within the cavity 100 from entering the communication holes 111 during molding. It is preferable that the material of the plug-like members 50 is a highly microwave-permeable material. It is preferable that the material of the plug-like members 50 is a heat-resistant microwave-permeable material, such as ceramic, for example. The plug-like members 50 may have any thickness.

Microwave antennas 40, which are connected to central conductors (not shown) in the coaxial cables 20, are arranged between the first end portions 20a of the coaxial cables 20 arranged within the communication holes 111 and the plug-like members 50. Microwaves transmitted through the coaxial cables 20 exit from the microwave antennas 40. Since the plug-like members 50 are permeable to microwaves, outgoing microwaves pass through the plug-like members 50 and are applied into the cavity 100. The microwaves transmitted through the coaxial cables 20 are thus applied into the cavity 100 through the communication holes 111. The microwave antennas 40 may have any shape, structure, length, and the like, as long as microwaves can be applied into the cavity 100. The microwave antennas 40 may be in contact with the plug-like members 50, but does not need to be in contact therewith. Portions of the microwave antennas 40 on the cavity 100 side may be embedded in the plug-like members 50. Leading ends of the microwave antennas 40 may be exposed on the side on which the inner face 100a facing the cavity 100 is located, but does not need to be exposed. The central conductors in the coaxial cables 20 and the microwave antennas 40 may be connected in any manner, and may be connected via connectors or the like, which are not shown, for example. Note that a configuration may be employed in which the central conductors are exposed at the first end portions 20a of the coaxial cables 20, and the exposed portions are used as the microwave antennas 40.

Note that, in the case where the microwave antennas 40 on the cavity 100 side has, for example, a shape forming a face, the plug-like members 50 may be omitted, and opening portions of the communication holes 111 on the cavity 100 side may be closed with the portions of the microwave antennas 40 that have a shape forming a face on the cavity 100 side.

The communication holes 111 may have any size. Since the communication holes 111 are not used as microwave waveguides here, the size or the like of the communication holes 111 does not need to depend directly on microwaves that are transmitted through the coaxial cables 20. In the case where the coaxial cables 20 are inserted in the communication holes 111, it is preferable that the communication holes 111 have a size that allows the coaxial cables 20 to be inserted thereinto, for example. It is preferable that, for example, the communication holes 111 have a size larger than that of the coaxial cables 20.

Note that the method of attaching the first end portions 20a of the coaxial cables 20 to the communication holes 111 is not limited to the above-described method. For example, the coaxial cables 20 may be attached to the communication holes 111 in any manner as long as the coaxial cables 20 are attached such that microwaves transmitted through the coaxial cables 20 are applied into the cavity 100 through the communication holes 111. The coaxial cables 20 may be attached such that the first end portions 20a are located within the communication holes 111, as shown in FIG. 1B, or may be attached such that the first end portions 20a are not located within the communication holes 111. For example, the first end portions 20a may be inserted in the communication holes 111, but does not need to be inserted therein. For example, in the case where the microwave antennas 40 that are arranged within the communication holes 111 have a length with which the microwave antennas 40 protrude out of the mold 10, the coaxial cables 20 may be attached such that the first end portions 20a are not located within the communication holes 111, and the central conductors of the coaxial cables 20 may be connected, on the outside of the mold 10, to the microwave antennas 40 within the communication holes 111. However, it is preferable that the coaxial cables 20 are attached such that the axial direction of each communication hole 111 is the same as the axial direction of the corresponding coaxial cable 20, and it is preferable that the coaxial cables 20 are attached such that each communication holes 111 and the corresponding coaxial cable 20 are coaxial.

The first end portions 20a of the coaxial cables 20 may be attached directly to the communication holes 111, or may be attached thereto indirectly. For example, the first end portions 20a may be fitted into the communication holes 111, or may be attached thereto via joints or the like that are provided on the first end portions 20a and the communication holes 111. These joints may be, for example, known joints or the like for attaching coaxial cables to other members, devices, or the like.

It is preferable that the coaxial cables 20 are removably attached to the communication holes 111. For example, it is preferable that the coaxial cables 20 are attached via removable joints or the like.

It is preferable that the coaxial cables 20 are attached such that microwaves do not leak from a gap or the like between the communication holes 111 and the coaxial cables 20 in a state where the first end portions 20a are attached to the communication holes 111. For example, in the case where the first end portions 20a of the coaxial cables 20 are inserted in the communication holes 111, and where there are gaps or the like between side faces of portions of the coaxial cables 20 that are inserted in the communication holes 111 and inner faces of the communication holes 111, it is preferable that a shielding material, such as metal mesh, is arranged on these portions. In the case where the first end portions 20a of the coaxial cables 20 are connected to the microwave antennas 40 outer side the communication holes 111, it is preferable to arrange covers that are made of a microwave-reflective material or the like to cover these connecting portions and the communication holes 111. For example, it is preferable that joints are arranged to cover these portions. Note that, since the temperature in areas near the first end portions 20a of the coaxial cables 20 increases, it is favorable to provide a cooling mechanism, such as a disk-shaped radiation fin, for the portions exposed from the mold.

The connection between the coaxial cables 20 and the microwave antennas 40 is not limited to the above-described connection. For example, the coaxial cables 20 and the microwave antennas 40 may be connected via coaxial tubes (not shown) or the like. For example, a configuration may be employed in which the microwave antennas 40 are connected to first end portions (not shown) of central conductors (not shown) of the coaxial tubes, and second end portions (not shown) of the central conductors of the coaxial tubes are connected to portions of the central conductors (not shown) of the coaxial cables 20 on the first end portion 20a side. These coaxial tubes may be arranged entirely within the communication holes 111, or may be arranged partially within the communication holes 111, or may be arranged entirely on the outside of the communication holes 111. These coaxial tubes may be fixed to the communication holes 111 by being fitted into the communication holes 111, for example. The coaxial tubes and the coaxial cables 20 may be connected via joints, which are not shown, for example. It is preferable that the coaxial tubes and the coaxial cables 20 are removably connected via removable joints or the like. The same applies to the connection between the coaxial tubes and the microwave antennas 40.

Note that the arrangement of the communication holes 111 is not limited to the arrangement shown in FIG. 1. It is preferable that the communication holes 111 are arranged such that microwaves within the cavity 100 has a desired intensity distribution in accordance with, for example, the shape, size, and the like of the cavity 100, and the wavelength, intensity, and the like of the applied microwaves. Note that the intensity of microwaves may refer to the electric field intensity of the microwaves, or may be the magnetic field intensity of the microwaves. For example, the intensity distribution of microwaves may refer to the electric field intensity distribution of the microwaves, or may be the magnetic field intensity distribution of the microwaves. The same applies to the following description.

Flow paths (not shown) for a cooling medium are provided within the first mold member 11 and the second mold member 12. The cooling medium may be a coolant that can be used to cool an ordinary mold, such as water, for example. The flow paths for the cooling medium that are provided in the first mold member 11 and the second mold member 12 are connected to the cooling apparatus 60 via supply tubes 61 and discharge tubes 62. The cooling medium supplied from the cooling apparatus 60 is supplied to the flow paths for the cooling medium via the supply tubes 61, circulates within the flow paths, and is discharged to the cooling apparatus 60 via the discharge tubes 62. The cooling apparatus 60 cools again the medium discharged via the discharge tubes 62, and supplies the cooled medium to the mold 10 via the supply tubes 61, for example. The cooling allows the molding material within the mold 10 to solidify or harden, and a molded piece can thus be obtained. The configuration for cooling a mold is known, and a detailed description thereof is omitted here accordingly. Note that, if the mold 10 does not need to be cooled, the flow paths for the cooling medium, the supply tubes 61, the discharge tubes 62, and the cooling apparatus 60 may be omitted. The configuration for cooling the mold provided in the molding apparatus 1000 is not limited to the above-described configuration.

Each of the coaxial cables 20 has the first end portion 20a and the second end portion 20b. The first end portion 20a of one coaxial cable 20 is attached to one communication hole 111. For example, the coaxial cable(s) 20 is attached to one, or two or more communication holes 111 provided in the mold 10 in one-to-one correspondence. However, the coaxial cables do not need to be attached to all of the communication holes 111 provided in the mold 10. A description is given here of a case where two coaxial cables are attached to two communication holes 111 in one-to-one correspondence. Each coaxial cable 20 is connected, at its second end portion 20b, to the microwave application unit 30, and transmits microwaves emitted by the microwave application unit 30.

The coaxial cables 20 may have any thickness and the like. Coaxial cables capable of transmitting microwaves emitted by the microwave application unit 30 are used as the coaxial cables 20, for example. As for the coaxial cables, a cable of a single type can selectively transmit microwaves with different frequencies, unlike common waveguides whose shape is fixed. Note that, although a predetermined frequency band can also be dealt with using a later-described flexible waveguide, a coaxial cable can deal with a broader frequency range. For example, a coaxial cable capable of transmitting microwaves with a certain frequency can also transmit microwaves with a higher frequency without the coaxial cable being changed. Accordingly, the coaxial cables 20 allow microwaves with different frequencies to be transmitted and applied into the cavity 100 without making a significant change to the mold 10. In the case where the microwave application unit 30 applies microwaves with different frequencies, the coaxial cables 20 may be coaxial cables capable of transmitting all of the microwaves with different frequencies applied by the microwave application unit 30, for example.

The microwave application unit 30 is connected to the second end portions 20b of the coaxial cables 20, and applies microwaves into the cavity 100 in the mold 10 via the coaxial cables 20. Specifically, two different microwave oscillators 300 provided in the microwave application unit 30 are connected to the second end portions 20b of two different coaxial cables 20 whose first end portions 20a are connected to different communication holes 111, and microwaves emitted by each of the microwave oscillators 300 are transmitted through the coaxial cable 20 that is connected thereto. The microwaves transmitted through the respective coaxial cables 20 exit from the microwave antennas 40 within different communication holes 111 that are connected to the first end portions 20a of the coaxial cables 20, and are applied into the cavity 100. Thus, the microwaves emitted by the respective microwave oscillators 300 are applied into the cavity 100 via the different communication holes 111.

The microwave application unit 30 applies microwaves to a molding material that is arranged within the cavity 100, for example. The microwave application unit 30 heats the molding material within the cavity by applying microwaves into the cavity 100, for example. Note that the molding material mentioned here may also be considered to be a molding material before being completely molded. For example, the microwave application unit 30 heats a solid molding material arranged within the cavity 100 to soften and melt the molding material and keep the molding material in a softened, molten state. Also, for example, the microwave application unit 30 also heats a liquid molding material arranged within the cavity 100 to increase and/or keep the temperature of the molding material. Note that the molding material within the cavity 100 may be in any state when microwaves are applied thereto.

Each of the microwave oscillators 300 provided in the microwave application unit 30 may have any structure as long as the microwave oscillators 300 can generate and emit microwaves. The microwave oscillators 300 are, for example, semiconductor oscillators or injection locked oscillators. By using semiconductor oscillators or injection locked oscillators as the microwave oscillators 300, for example, the phase of microwaves to be emitted can be controlled. In the case of controlling the phase of microwaves to be emitted by the microwave oscillators 300, it is preferable to use semiconductor oscillators or injection locked oscillators. The microwave oscillators 300 may alternatively be microwave oscillators such as magnetrons, klystrons, or gyrotrons. Each of the microwave oscillators 300 may also include an amplifier (not shown) or the like.

The microwave oscillators 300 may emit microwaves with any frequency, and the output or the like thereof may take any form. For example, the frequency of microwaves emitted by the microwave oscillators 300 may be 2.45 GHz, or may be 5.8 GHz, or may be 24 GHz, or may be 915 MHz, or may be another frequency within a range from 300 MHz to 300 GHz.

Note that the microwave application unit 30 is not limited to the above-described microwave application unit 30 as long as the microwave application unit 30 is connected to the second end portions 20b of the coaxial cables 20 and applies microwaves into the cavity 100 in the mold 10 via the coaxial cables 20.

The microwave application unit 30 may divide each microwave emitted by one microwave oscillator 300, transmit the divided microwaves through the two coaxial cables 20, and apply the microwaves into the cavity 100 from the two communication holes 111 to which the coaxial cables 20 are attached. For example, one microwave oscillator 300 may be connected, via, for example, a dividing unit such as a divider (not shown) or a distributor (not shown), to the second end portions 20b of the two coaxial cables 20 whose first end portions 20a are attached to the two communication holes 111, and microwaves emitted by the one microwave oscillator 300 may be transmitted through the two coaxial cables 20. In this case, the second end portion 20b of each coaxial cable 20 may also be considered to be, for example, a portion of the coaxial cable 20 that is connected to a divider or the like, and may also be considered to be a portion at which the dividing unit, such as a divider, is connected to the microwave oscillator 300. Note that, in the case where, for example, semiconductor oscillators or injection locked oscillators are used as the microwave oscillators 300, and where each microwave emitted by one microwave oscillator 300 is divided and the divided microwaves are amplified by different amplifiers and transmitted through the coaxial cables 20, these amplifiers may also be considered to be different microwave oscillators 300.

The microwave application unit 30 may be configured to apply microwaves with different frequencies. For example, a configuration may be employed in which the microwave application unit 30 has one or more microwave oscillators 300 capable of changing the frequency, and changes the frequency of microwaves to be applied via the coaxial cables 20. Also, a configuration may be employed in which the microwave application unit 30 has two or more microwave oscillators for applying microwaves with different frequencies, and the microwave oscillator to be connected to the second end portion 20b of one coaxial cable 20 can be changed to any one of the two or more microwave oscillators that apply microwaves with different frequencies. Also, a configuration may be employed in which the microwave application unit 30 has two microwave oscillators 300 that apply microwaves with different frequencies, and applies microwaves with different frequencies from different communication holes 111 via the coaxial cables 20 that are connected to the respective microwave oscillators 300. In this case, for example, all of the microwave oscillators 300 may simultaneously emit microwaves with different frequencies, or may be configured to not simultaneously emit microwaves.

The microwave application unit 30 may apply microwaves with different frequencies such that the molding material has a high dielectric loss, for example. In the present embodiment, since microwaves are applied using the coaxial cables 20 capable of transmitting microwaves with different frequencies, microwaves with different frequencies can be applied into the cavity 100 in one mold 10 without remaking the mold 10 or the like, or changing the coaxial cables 20. The same applies to other embodiments. The microwave application unit 30 may apply microwaves with different frequencies over time in accordance with a change over time in the dielectric loss of the molding material, or may apply microwaves with different frequencies in the case where different kinds of molding, such as molding using different molding materials, are performed using one mold 10. Thus, for example, the efficiency of microwave heating can be optimized or increased in accordance with a difference in the dielectric loss between molding materials and/or a change in the dielectric loss due to a temperature change in a molding material.

For example, there are cases where molded pieces of the same shape and different materials are manufactured using one mold in accordance with, for example, the grade of the molded pieces. Meanwhile, it is known that, in microwave heating and the like, the frequency of microwaves and other factors that maximize the dielectric loss differ depending on, for example, the molding material that is to be heated. For this reason, in the case of molding different molding materials using one mold, it is preferable in terms of, for example, heating efficiency to apply microwaves with frequencies that are most suitable for the respective molding materials to perform molding. Since the coaxial cables 20 can transmit microwaves with different frequencies in the molding apparatus 1000 according to the present embodiment, microwaves with different frequencies can be applied into the cavity 100 in the mold 10 via the coaxial cables 20, and microwaves with different frequencies can be applied during molding that is performed using one mold 10. Thus, for example, when different molding materials are molded using one mold 10, microwaves with frequencies that are most suitable for the respective molding materials can be applied as described above, and the heating efficiency or the like can be increased.

It is also known that, in microwave heating, the microwave frequency that maximizes the dielectric loss also differs depending on the material temperature. For this reason, in a process of applying microwaves to heat a molding material, it is desirable, in terms of the heating efficiency or the like, to change the frequency of microwaves to be applied to a frequency that increases the dielectric loss at the temperature of the molding material, in accordance with a temperature change therein. In the molding apparatus 1000 according to the present embodiment, microwaves are applied using the coaxial cables 20, and it is therefore possible to apply microwaves with different frequencies into the cavity 100 in the mold. For example, when a molding material is being heated by applying microwaves thereto, the frequency of microwaves emitted by the microwave application unit 30 can be changed to apply microwaves with a frequency that is suitable for the current temperature of the molding material. Note that the temperature of a molding material when being molded may be detected by attaching a temperature sensor or the like, which is not shown, to the mold 10. Alternatively, information that indicates a change over time in the temperature during microwave application may be acquired in advance by performing an experiment or the like, and the temperature may be acquired using this information based on the elapsed time.

Note that, for example, in the molding apparatus according to the present embodiment, it is also conceivable to attach ordinary waveguides or the like whose shape is fixed to the mold, instead of providing the mold with the communication holes 111 to which the first end portions 20a of the coaxial cables 20 are attached, to apply microwaves into the cavity 100. However, the cross-sectional shape, size, length, and the like of the waveguides are determined for each wavelength of microwaves to be transmitted. For this reason, in the case of using such ordinary waveguides, the transmittable frequency range is narrower than in the case of using the coaxial cables, and the frequency cannot be significantly changed as with the coaxial cables. To apply microwaves with significantly different frequencies in the case of using a mold to which the waveguides are attached, the mold needs to be remade. Also, it is difficult to significantly change the frequency in the process of molding using one mold as in the case of using the coaxial cables, compared with the case of using the coaxial cables.

For example, the microwave application unit 30 may also apply microwaves with different intensities via multiple coaxial cables 20. For example, the microwave application unit 30 may apply microwaves with intensities that differ between the coaxial cables 20. For example, the microwave application unit 30 may have two or more microwave oscillators 300 that apply microwaves with different intensities, and the microwave oscillator to be connected to the second end portion 20b of one coaxial cable 20 may be able to be changed to any one of the two or more microwave oscillators that apply microwaves with different intensities. The microwave oscillators 300 provided in the microwave application unit 30 may be microwave oscillators that allow individual control to turn on and off.

Note that microwaves transmitted through different coaxial cables 20 by the microwave application unit 30 may have the same phase, or may have different phases.

The microwave application unit 30 may control the phase of microwaves to be applied from the two respective communication holes 111 via the two coaxial cables 20. By controlling the phase of microwaves to be applied into the cavity 100 via the two respective coaxial cables 20, for example, it is possible, due to interference or the like between the microwaves, to evenly apply microwaves into the cavity 100, concentrate the microwaves at one or more desired portions within the cavity 100, and cause the microwaves to mutually enhance their intensity. Thus, for example, control can be performed such that microwaves within the cavity 100 have a desired distribution, for example. Note the microwave application unit 30 may be controlled such that microwaves emitted by the two microwave oscillators 300 have the same phase. The phase control mentioned here may also be considered to be control of the initial phase, for example. Microwaves with different phases emitted by the microwave application unit 30 are microwaves with the same frequency and different phases, for example.

For example, a configuration may be employed in which the two microwave oscillators 300 provided in the microwave application unit 30 and connected to the two respective coaxial cables 20 are microwave oscillators capable of controlling the phase of microwaves to be emitted, and the phase of microwaves to be emitted by these microwave oscillators are controlled separately, thereby making it possible to separately control the phase of microwaves to be applied from different coaxial cables 20 that are connected to the respective microwave oscillators. A microwave oscillator 300 capable of controlling the phase is, for example, a microwave oscillator that includes a phaser or a phase controller (not shown), or the like. The microwave oscillator 300 capable of controlling the phase is, for example, a microwave oscillator that has a semiconductor oscillator (or an injection locked oscillator) and a phaser or a phase controller for changing the phase of microwaves to be emitted by the semiconductor oscillator (or the injection locked oscillator). The phase of microwaves to be emitted by each microwave oscillator 300 is controlled by a control unit or the like, which is not shown, for example. The control unit for controlling the phase may be provided in the microwave application unit 30, for example. Note that only one of the two microwave oscillators 300 may be a microwave oscillator capable of controlling the phase. Note that, in the case of dividing each microwave emitted by one microwave oscillator 300, changing the phase of the divided microwaves using different phasers or phase controllers (not shown), and then transmitting the microwaves via the coaxial cables 20, these phasers or phase controllers may also be considered to be different microwave oscillators 300 capable of controlling the phase. Note that, for example, in the case of using magnetrons as the microwave oscillators 300 as well, each microwave emitted by one microwave oscillator 300 may be divided using a dividing unit or the like, and the divided microwaves may be transmitted through the respective coaxial cables 20. In this case, at least one of the divided microwaves may be transmitted through a coaxial cable after the phase thereof has been changed by a phaser of a phase controller Also, at least one of the divided microwaves may be transmitted through a coaxial cable after the microwave has been amplified by an amplifier.

Also, for example, a configuration may be employed in which the microwave application unit 30 has two or more microwave oscillators 300 that emit microwaves with different phases as microwave oscillators that are connected to one coaxial cable 20, and microwaves with different phases can be applied via the one coaxial cable 20 by changing the microwave oscillator 300 to be connected to the coaxial cable 20 between the microwave oscillators 300 that emit microwaves with different phases.

The microwave application unit 30 may include, for example, multiple microwave oscillators 300, and at least some of these microwave oscillators 300 may be able to be controlled to generate microwaves with a phase different from the phase of microwaves generated by the other microwave oscillators 300. Note that the microwave application unit 30 may be able to be controlled such that microwaves emitted by the multiple microwave oscillators 300 have the same phase. The phase control may also be considered to be control of the initial phase, for example.

Note that it is preferable that the microwave application unit 30 applies microwaves into the cavity 100 from two communication holes 111 via two coaxial cables 20 such that microwaves within the cavity 100 have a desired intensity distribution. The same applies to other embodiments. For example, the microwave application unit 30 may separately set the intensity of microwaves to be applied into the cavity 100 via the two respective coaxial cables 20 to different intensities or the same intensity, for example, such that microwaves within the cavity 100 has a desired intensity distribution. The intensity of microwaves applied from the respective communication holes 111 may be changed over time.

Also, for example, the microwave application unit 30 may control the phase of microwaves to be applied into the cavity 100 via the two respective coaxial cables 20 such that microwaves within the cavity 100 have a desired intensity distribution. For example, the position at which microwaves mutually enhance their intensity, the position at which microwaves mutually offset their intensity, the position at which microwaves concentrate, and the like can be changed due to, for example, interference, by controlling the phase of microwaves applied from the two respective communication holes 111 provided in the first mold member 11. Thus, the intensity distribution of microwaves can be set to a desired intensity distribution by controlling the phase of respective microwaves to be applied. The phase of microwaves to be applied may be changed over time.

The microwave application unit 30 may apply microwaves via the two respective coaxial cables 20 for different periods. For example, the microwave application unit 30 may apply microwaves for periods that differ between the coaxial cables 20. For example, the microwave application unit 30 may apply microwaves via the two respective coaxial cables 20 for different periods, or may apply microwaves via the two respective coaxial cables 20 for the same period. "Different periods" means periods with different end times and/or different start times, for example. For example, the intensity distribution of microwaves within the cavity 100 can be changed so as to vary over time by applying microwaves via different coaxial cables 20 for different periods. Also, a molding material can be optimally heated based on, for example, a relationship between the shape of the cavity 100 and the positions of the communication holes 111. For example, a molding material within the cavity 100 can be evenly heated by starting microwave application from a communication hole 111 located at a portion where the thickness of the cavity (e.g. the distance between the first mold member 11 and the second mold member 12) is larger, before microwave application from a communication hole 111 located at a portion where the thickness is smaller. The timing of application, the length of the application period, and the like are controlled by a control unit, which is not shown, for example. Also, microwaves may be applied intermittently. Note that, in the case where the microwave emission of one of the microwave oscillators 300 provided in the microwave application unit 30 is divided by a diving unit or the like and is connected to two coaxial cables 20, microwaves can be applied via the two respective coaxial cables 20 for different periods by, for example, providing at least one of the coaxial cables 20 with an interruption unit or the like for interrupting transmitted microwaves, and operating or controlling this interruption unit as appropriate to interrupt the divided microwaves that are transmitted through the two respective coaxial cables 20 at different timings.

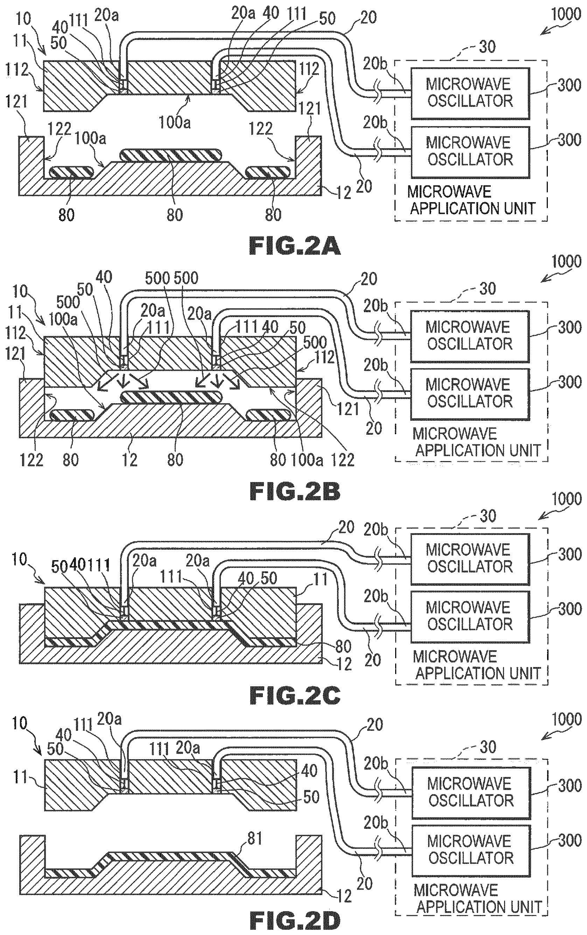

FIG. 2 show cross-sectional views (FIGS. 2A to 2D) for illustrating a method for manufacturing a molded piece using the molding apparatus 1000. In FIG. 2, the cooling apparatus 60, the supply tubes 61, the discharge tubes 62, and so on are omitted.

A specific example of the method for manufacturing a molded piece using the molding apparatus 1000 will be described below with reference to FIG. 2. The following description will take an example of molding a thermoplastic resin.

(Step S101) Initially, in a state where the first mold member 11 has been moved to and is kept at the upper side of the second mold member 12, i.e. in a state where the mold 10 is open, a thermoplastic resin 80 in a pellet form is arranged on the inner face 100a of the second mold member 12 facing the cavity 100, as shown in FIG. 2A.

(Step S102) Next, a clamping apparatus or the like, which is not shown, is operated to move the first mold member 11 in a direction closing the mold 10, as shown in FIG. 2B. That is to say, the first mold member 11 is moved downward to bring the first mold member 11 close to the second mold member 12 that is arranged below the first mold member 11. Then, the first mold member 11 is moved to a position that is very close to the position at which molding is to be performed. It is assumed that, in this state, the distance between the inner face 100a of the first mold member 11 facing the cavity 100 and the inner face 100a of the second mold member 12 facing the cavity 100 is wider than that while molding is being performed. It is also assumed that, in this state, the inner side face 122 of the side wall 121 of the second mold member 12 is in contact with the side face 112 of the first mold member 11 opposing the inner side face 122 such that the gap between the inner side face 122 and the side face 112 is substantially zero and thus has a size that does not allow microwaves to pass through the gap.

(Step S103) Upon the two microwave oscillators 300 in the microwave application unit 30 generating and emitting microwaves, the emitted microwaves are transmitted through the respective coaxial cables 20, emitted from the microwave antennas 40 connected to the first end portions 20a of the respective coaxial cables 20, pass through the plug-like members 50, and are applied into the cavity 100. Thus, microwaves 500 are applied from the communication holes 111 into the cavity 100, as shown in FIG. 2B. The thermoplastic resin 80 is heated and is then softened and melted due to the microwaves 500 being applied thereto. Since microwaves do not leak from the gap between the inner side face 122 of the side wall 121 of the second mold member 12 and the side face 112 of the first mold member 11 opposing the inner side face 122 as mentioned above, the amount of loss of microwaves is small, and no constituent element for preventing microwaves from leaking from the mold 10 (e.g. shield for covering the entire mold 10 in the molding apparatus 1000 etc.) is needed. The application time of the microwaves 500, for example, is set in accordance with the size of the cavity 100, and the intensity, wavelength, and the like of microwaves to be applied are set in accordance with the thermoplastic resin to be used, for example. The microwaves 500 mentioned here are the applied microwaves that are schematically shown for description, and do not necessarily correctly depict, for example, the direction in which the actual microwaves 500 are applied.

(Step S104) The microwave emission from the microwave application unit 30 is stopped, the first mold member 11 is moved in a clamping direction by the clamping apparatus or the like to close the mold, as shown in FIG. 2C, and the softened, molten thermoplastic resin 80 is molded within the molding cavity 100 between the first mold member 11 and the second mold member 12.

(Step S105) A cooling medium is circulated from the cooling apparatus 60 via the supply tubes 61 and the discharge tubes 62 through the flow paths for the cooling medium that are provided in the first mold member 11 and the second mold member 12, thereby cooling the thermoplastic resin. The thermoplastic resin 80 thus hardens, and the molding of the thermoplastic resin 80 is completed.

(Step S106) The first mold member 11 is moved in the direction opening the mold 10, i.e., is moved upward by the clamping apparatus to open the mold 10, as shown in FIG. 2D. Then, a molded piece 81 is taken out.

Note that a configuration may be employed in which, in step S102, the first mold member 11 is moved to a position very close to the position at which molding is to be performed, thereafter the movement of the first mold member 11 is temporarily stopped, and then microwaves are applied in step S103, or a configuration may be employed in which, in step S102, the first mold member 11 is moved to a position very close to the position at which molding is to be performed, and thereafter microwaves are applied in step S103 without stopping the movement of the first mold member 11. The microwave application need only be performed before molding is completed, and for example, microwaves may be applied in a state where the mold 10 is closed before cooling starts.

As described above, according to the present embodiment, microwaves are applied into the cavity in the mold 10 via the coaxial cables 20 whose first end portions 20a are attached to the communication holes 111 in the mold 10. Thus, an apparatus or the like for applying microwaves to a molding material does not need to be moved to, for example, the upper side of the mold, and microwaves can be applied readily and quickly. In addition, a high-quality molded piece can be obtained by quickly performing molding after heating the molding material through microwave application, and the molding material to which microwaves have been applied using the mold can be molded appropriately.

In the present embodiment, microwaves can be applied using the coaxial cables 20 from the communication holes 111 provided in the mold 10, and it is therefore possible to perform molding using one mold 10 while applying microwaves with different frequencies. Also, it is possible to readily handle transmission paths and readily design the molding apparatus 1000, for example, as a result of using the coaxial cables 20 that can be flexibly bent and stretched as transmission paths for microwaves emitted by the microwave application unit 30.

In the present embodiment, if the molding apparatus 1000 is used as a press molding apparatus that uses the mold 10 as a mold for press molding, microwaves can be efficiently applied to a molding material at an appropriate distance by applying microwaves in a process of bringing the mold members close to each other.

Note that the communication holes 111 to which the coaxial cables 20 are attached may be provided in the second mold member 12, which is a stationary mold, but it is preferable to provide the communication holes 111 in the first mold member 11, which is a movable mold, as in the above embodiment. This is because, in an ordinary mold, the movable mold serves as a mold member that comes into contact with a back side of a molded piece, and it can therefore be considered that even if a trace of a communication hole 111 or the like is left on the molded piece, it does not significantly affect the quality of the molded piece. Note that, in the case where ordinary waveguides (not shown) whose shape is fixed, rather than the coaxial cables 20, are used as microwave transmission paths in the molding apparatus according to the above embodiment, these waveguides cannot be flexibly bent or stretched, and the length and the like of the waveguides are also restricted by the frequency of microwaves to be transmitted. For this reason, to use a mold member that is connected to the microwave application unit 30 with waveguides as a movable mold, for example, the microwave application unit and the waveguides need to be moved together with the movable mold, resulting in a complicated configuration. It is then considered that the configuration that enables microwaves to be applied from a mold member serving as a movable mold cannot be readily obtained. In contrast, in the present embodiment, microwaves are transmitted and applied using the flexible coaxial cables 20 as variable transmission units, and it is therefore possible to only move the mold member to which the coaxial cables 20 are attached, without moving the position of the microwave application unit 30, for example. Accordingly, microwaves can be readily applied from a mold member serving as a movable portion. In addition, as a result of providing the communication holes in the movable mold, which is relatively lightweight and thin, the mold can also be processed more readily than in the case of providing the communication holes in a stationary mold. Note that the same applies to other embodiments.

### Embodiment 2

The above embodiment has described a vertical molding apparatus for performing press molding, whereas the present embodiment will describe an example of applying the molding apparatus described in the above embodiment to a horizontal molding apparatus for performing injection molding.

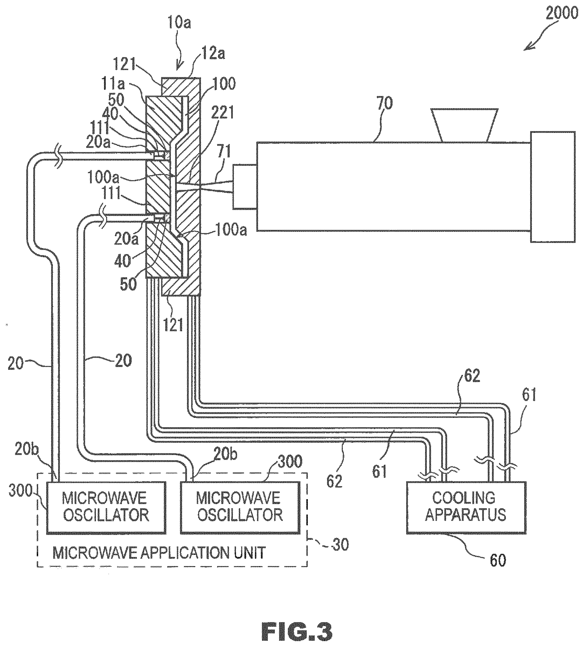

FIG. 3 is a cross-sectional view showing a configuration of a molding apparatus according to the present embodiment.

A molding apparatus 2000 includes a mold 10a, two coaxial cables 20, a microwave application unit 30, a cooling apparatus 60, supply tubes 61, discharge tubes 62, and an ejection apparatus 70. The two coaxial cables 20, the microwave application unit 30, the cooling apparatus 60, the supply tubes 61, and the discharge tubes 62 are similar to those in the above embodiment, and detailed descriptions thereof are omitted here accordingly.

The mold 10a includes a first mold member 11a and a second mold member 12a. Since the molding apparatus 2000 is a horizontal molding apparatus, the first mold member 11a and the second mold member 12a of the mold 10a are arranged in a lateral direction here, and a cavity 100 is formed between a side face of the first mold member 11a and a side face of the second mold member 12a.

The first mold member 11a is obtained by arranging the above-described first mold member 11 such that the lower face thereof including a face serving as the inner face 100a facing the cavity 100 serves as a side face opposing the second mold member 12a, and has a configuration similar to that of the first mold member 11. A detailed description of the first mold member 11a is omitted here accordingly. Note that, here, the first mold member 11a is a movable mold, and is attached, directly or indirectly, to a clamping apparatus (not shown) or the like so as to move in directions approaching and moving away from the second mold member 12a, i.e. in the lateral direction. Note that the molding apparatus 2000 may also has a guide rod, a tie bar, or the like for restricting the direction in which the first mold member 11a moves.

The second mold member 12a is obtained by arranging the above-described second mold member 12 such that the upper face thereof including a face serving as the inner face facing the cavity 100 serves as a side face opposing the first mold member 11a, and is further provided with an injection hole 221. The configuration of the second mold member 12a excluding the injection hole 221 is similar to that of the second mold member 12, and a description thereof is omitted here accordingly. The injection hole 221 is a hole that is provided to inject a molding material, which is ejected from the ejection apparatus 70, into the cavity 100, and brings the cavity 100 and the outside of the second mold member 12a into communication with each other. The outer side of the injection hole 221 is connected to an outlet 71 of the ejection apparatus 70, and the molding material ejected from the outlet 71 of the ejection apparatus 70 is injected into the cavity 100 from an opening portion of the injection hole 221 on the cavity 100 side. The molding material to be injected is, for example, a molding material that has been heated and thereby softened and melted. The injection hole 221 provided in the mold 10 is a known technique, and a description thereof is omitted accordingly.

The ejection apparatus 70 is an apparatus for ejecting a molding material, and has the outlet 71 from which the molding material is ejected. The ejection apparatus 70 may have any structure and the like. The ejection apparatus 70 is a known technique, and a description thereof is omitted accordingly.

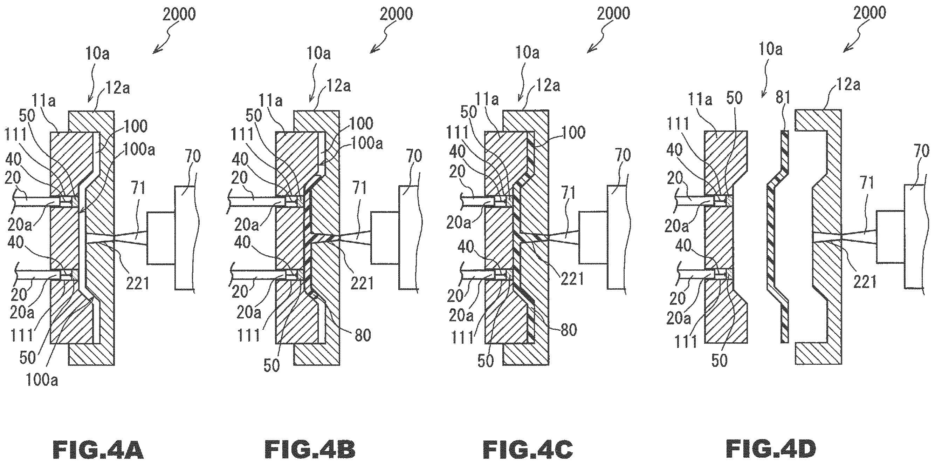

FIG. 4 show cross-sectional views (FIGS. 4A to 4D) for illustrating a method for manufacturing a molded piece using the molding apparatus 2000. The microwave application unit 30, the cooling apparatus 60, the supply tubes 61, the discharge tubes 62, and so on, are omitted in FIG. 4.

A specific example of the method for manufacturing a molded piece using the molding apparatus 2000 will be described below with reference to FIG. 4. The following description will take an example of molding a thermoplastic resin.

(Step S201) Initially, a clamping apparatus or the like, which is not shown, is operated to move the first mold member 11a in a direction approaching the second mold member 12a to a molding position, thereby closing the mold 10, as shown in FIG. 4A. The molding cavity 100 is formed between the first mold member 11a and the second mold member 12a.

(Step S202) Next, a thermoplastic resin 80, which has been heated and thus softened and melted, is ejected from the outlet 71 of the ejection apparatus 70, and the thermoplastic resin 80 is injected from the injection hole 221 in the second mold member 12a into the cavity 100, as shown in FIG. 4B. During the injection, microwaves are emitted from the two microwave oscillators 300 in the microwave application unit 30, and microwaves are applied into the cavity 100 from the communication holes 111 via the coaxial cables 20 that are connected to the respective microwave oscillators 300. The microwave application enables the thermoplastic resin 80 injected into the cavity 100 to be prevented from being cooled and hardened by the mold 10 before filling the cavity 100.

(Step S203) After the injection of the thermoplastic resin 80 into the cavity 100 has finished as shown in FIG. 4C, the microwave emission from the microwave application unit 30 is stopped, a cooling medium is circulated through flow paths for the cooling medium that are provided in the first mold member 11a and the second mold member 12a, from the cooling apparatus 60 via the supply tubes 61 and the discharge tubes 62, thereby cooling thermoplastic resin 80. The thermoplastic resin 80 thus hardens, and the molding of the thermoplastic resin 80 is completed.

(Step S204) The first mold member 11a is moved in a direction opening the mold 10a, i.e. in the lateral direction so as to move away from the second mold member 12a by the clamping apparatus, which is not shown, and the mold 10a is opened, as shown in FIG. 4D. Then, a molded piece 81 is taken out.

Note that, in step S202, microwaves may be applied at any timing before molding is completed. For example, microwave application may be started before the thermoplastic resin 80 is injected, or may be started at the same time as when injection starts, or microwaves may be applied after the cavity 100 has been filled with the thermoplastic resin 80 and before cooling starts. Microwave application performed by the microwave application unit 30 and resin ejection performed by the ejection apparatus 70, for example, are controlled by a control unit or the like, which is not shown.

As described above, according to the present embodiment, microwaves are applied into the cavity 100 in the mold 10a via the coaxial cables 20 whose first end portions 20a are attached to the communication holes 111 in the mold 10a. It is thus possible, in the case of injection molding as well, to readily and quickly apply microwaves and appropriately mold a molding material to which microwaves have been applied using the mold. In addition, in the case of injection molding, the ejection pressure can be reduced, and an injector can be simplified.

Note that, although the above embodiments have described a case where the mold is constituted by two mold members, namely the first mold member and the second mold member, the number of mold members to constitute the mold is not limited to two, and need only be two or more. For example, the mold may be constituted by three or more mold members. In the case where the mold is constituted by multiple mold members, any of the mold members may be used as a stationary mold and a movable mold, for example. In the case where the mold is constituted by multiple mold members, for example, the descriptions of the first mold member and the second mold member in the embodiments may be read, as appropriate, as descriptions of the multiple mold members. For example, in the case where the mold is constituted by multiple mold members, the descriptions of the first mold member in the embodiments may be read, as appropriate, as descriptions of a mold member to be used as a movable mold or a mold member having the communication holes 111 to which the coaxial cables 20 are attached, of the multiple mold members, and the descriptions of the second mold member may be read, as appropriate, as descriptions of a mold member to be used as a stationary mold or a mold member to which the coaxial cables 20 are not attached, of the multiple mold members.

The number of mold members having the communication holes 111 to which the first end portions 20a of the coaxial cables 20 are attached is not limited to one, and need only be one or more of the multiple mold members provided in the mold. For example, some of the multiple mold members provided in the mold may have the communication holes 111, or all of the multiple mold members provided in the mold may have the communication holes 111. For example, in the above embodiments, one or more communication holes 111 may be provided in the second mold member. The communication holes 111 may be provided in a stationary mold, of the two or more mold members constituting the mold, or may be provided in a movable mold, or may be provided in both the stationary mold and the movable mold. The number of communication holes 111 provided in each of the mold members that have the communication holes 111, such as the first mold member, is not limited to two, and need only be, for example, one or more. For example, the number of communication holes 111 provided in each of the first mold member 11 in Embodiment 1 and the first mold member 11a in Embodiment 2 need only be one, or two or more, and may be three or more. In the case where more than one mold members constituting one mold have the communication holes 111, the number of communication holes 111 provided in the respective mold members may be the same or different. The arrangement and the size (e.g. diameter, length etc.) of the communication holes 111 arranged in the respective mold members may be the same or different. The one, or two or more communication holes 111 may be provided in the mold 10 in any arrangement. It is preferable that the one, or two or more communication holes 111 are arranged at positions that allow microwaves within the cavity 100 to have a desired intensity distribution, for example.

Note that the microwave application unit 30 may have any configuration as long as the microwave application unit 30 can apply microwaves via the coaxial cables 20 that are attached to the one, or two or more communication holes 111 provided in the mold. For example, the microwave application unit 30 may have the same number of microwave oscillators 300 as the number of one, or two or more communication holes 111, as described in the above embodiments. For example, the microwave application unit 30 may divide the microwave emission of the one or more microwave oscillators 300 and emit the microwaves via two or more coaxial cables 20. Note that the communication holes 111 provided in the mold are the communication holes 111 provided in multiple mold members constituting the mold.

In the case where the mold has two or more communication holes 111, the frequency of microwaves applied by the microwave application unit 30 via the multiple respective communication holes 111 in the mold may be the same or different, and the frequency may be variable or constant, similarly to the above embodiments. For example, the microwave application unit 30 may apply microwaves with different frequencies into the cavity 100 so as to increase the dielectric loss of the molding material, similarly to Embodiment 1.

In the case where the mold has two or more communication holes 111 to which the coaxial cables 20 are attached, the intensity of microwaves emitted by the microwave application unit 30 from the two or more respective communication holes 111 via the coaxial cables 20 may be the same or different, and the intensity of microwaves may be variable or constant, similarly to the above embodiments.

In the case where the mold has two or more communication holes 111 to which the coaxial cables 20 are attached, the microwave application unit 30 may control the phase of microwaves from one or more of the multiple communication holes 111 via the coaxial cables 20, similarly to the above embodiments.

Note that, in the case where the mold is constituted by three or more mold members as well, it is preferable, similarly to Embodiment 1, that the communication holes 111 to which the coaxial cables 20 are attached are provided in a movable mold member, i.e. a movable mold, of the multiple mold members constituting the mold.

In the case where the mold has two or more communication holes 111 to which the coaxial cables 20 are attached, the microwave application unit 30 may apply microwaves into the cavity 100 via the two or more coaxial cables 20 such that microwaves within the cavity 100 has a desired intensity distribution. For example, similarly to Embodiment 1, the microwave application unit 30 may apply microwaves such that microwaves within the cavity 100 has a desired intensity distribution, by separately setting the intensity of microwaves applied into the cavity 100 via the multiple respective coaxial cables 20 to different intensities or the same intensity, for example, or by controlling the phase of the microwaves applied into the cavity 100 via the multiple respective coaxial cables 20, or by applying microwaves via the multiple respective coaxial cables 20 for different periods. Note that, in the case of controlling the phase to locally increase the microwave intensity, it is more preferable that the number of communication holes 111 to which the coaxial cables 20 are attached is three or more. For example, a desired position within the cavity 100 can be locally heated by controlling the phase of microwaves applied from the three or more respective communication holes 111 such that the microwaves enhance each other due to interference therebetween at the desired position.

### Embodiment 3

Note that, in the above embodiments, flexible waveguides may be used, instead of using the coaxial cables 20, as transmission units for transmitting microwaves emitted by the microwave application unit 30.

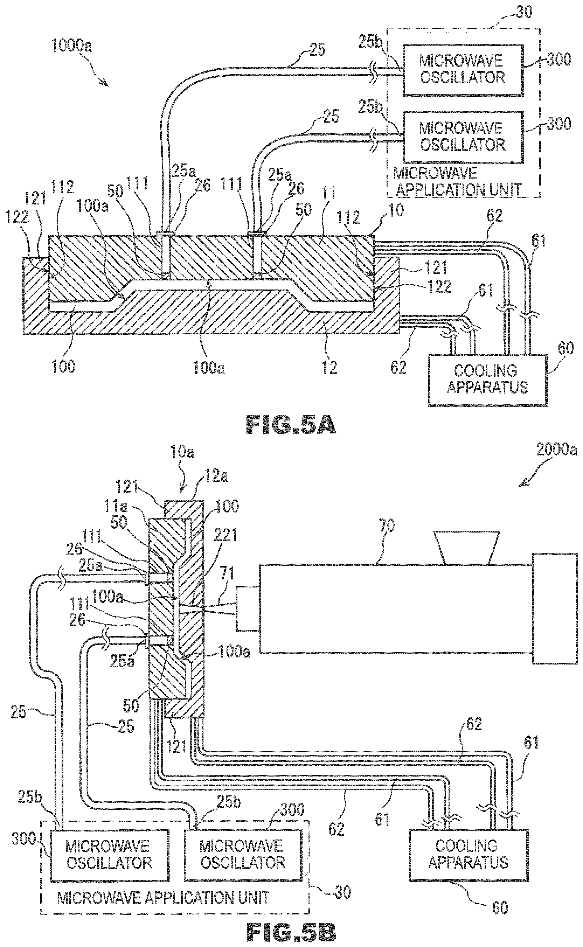

FIG. 5A illustrates a first example of a molding apparatus according to Embodiment 3 of the present invention, and shows a cross section of a mold portion. This molding apparatus 1000a is the same as the molding apparatus for performing press molding that has been described in Embodiment 1, but uses flexible waveguides 25 in place of the coaxial cables 20.

The flexible waveguides 25 are, for example, waveguides that are flexible. For example, each of the flexible waveguides 25 is a waveguide that has bellows-shaped metal foil or the like on a side face thereof, and is formed to have a cylindrical shape. See Non-Patent Document 1 below, for example, for an example of a flexible waveguide. Non-Patent Document 1: "Rectangular continuous flexible waveguides", [online], FURUKAWA C&B CO., LTD., [searched 7 December, 2018], Internet <URL: https://www.furukawa-fcb.co.jp/product/micro/longpipe.htm>. However, the flexible waveguides 25 used in the present embodiment are not limited to those having the above-described structure. A description is given here of an example of using, as the flexible waveguides 25, flexible waveguides whose cross section perpendicular to the longitudinal direction has a rectangular shape. However, the cross-sectional shape of the flexible waveguides 25 is not limited to being rectangular, and may be rectangular with rounded corners, elliptic, circular, or the like, for example. The cross-sectional shape mentioned here is the cross-sectional shape in an opening portion of each flexible waveguide, for example. It is preferable that the cross-sectional shape of the flexible waveguides 25 is the same as the cross-sectional shape of the communication holes 111. For example, in the case where the cross sections of the flexible waveguides 25 have a rectangular shape as mentioned above, it is preferable that the cross sections of the communication holes 111 also have a rectangular shape. However, the cross-sections of the flexible waveguides 25 and the communication hole 111 may have different shape.

The flexible waveguides 25 have first end portions 25a, which are attached to the communication holes 111 in the die 10, and second end portions 25b, which are connected to the microwave application unit 30, similarly to the coaxial cables 20. A description is given here of an example in which the first end portions 25a are attached so as to cover outer portions of the mold 10 that are open through the communication holes 111. Thus, the communication holes 111 are in communication with opening portions at the first end portions 25a of the flexible waveguides 25. However, the method of attaching the first end portions 25a of the flexible waveguides 25 to the communication holes 111 is not limited to the above-described attaching method as long as the first end portions 25a are attached such that microwaves transmitted through the flexible waveguides 25 can be applied into the cavity 100 in the mold 10 via the communication holes 111. For example, the first end portions 25a may be attached to the communication holes 111 using a method similar to the method of attaching the first end portions 20a of the coaxial cables 20 to the communication holes 111, as appropriate. For example, the first end portions 25a of the flexible waveguides 25 may be attached so as to be inserted in the communication holes 111, similarly to the first end portions 20a of the coaxial cables 20. The first end portions 25a of the flexible waveguides 25 may be indirectly attached to the communication holes 111 via joints (not shown) or the like. Antennas (not shown) may also be attached to the first end portions 25a of the flexible waveguides 25 such that these antennas are arranged within the communication holes 111, similarly to the first end portions 20a of the coaxial cables 20. It is preferable that the flexible waveguides 25 are attached to the communication holes 111 provided in a movable mold in the mold 10. By providing the communication holes 111 and the antennas (not shown) in a movable mold, which is relatively lightweight and thin, the mold can also be more readily processed than in the case of providing the communication holes 111 and the antennas in a stationary mold. It is also preferable that the first end portions 25a of the flexible waveguides 25 are removably attached to the communication holes 111. It is assumed here that flanges 26 are provided at the first end portions 25a, and these flanges 26 are removably attached with bolts (not shown) in areas around the portions that are open due to the communication holes 111. It is also assumed here that the opening portions of the flexible waveguides 25 and the opening portions of the communication holes 111 on the first end portion 25a side have the same shape and the same size, and the flexible waveguides 25 are attached to the communication holes 111 such that corresponding opening portions overlap each other. The opening portions do not need to have the same shape or the same size. The structure and the like for removably attaching the flexible waveguides 25 are not limited to the above-described structure and the like.

Note that, instead of providing the plug-like members 50 on the cavity 100 side of the communication holes 111, a configuration may be employed in which the first end portions 25a are inserted in and thus attached to the communication holes 111 such that the opening portions at the first end portions 25a of the flexible waveguides 25 are located at the same height or substantially the same height of the inner face facing the cavity 100, and the opening portions at the first end portions 25a are closed with members that are made of a material similar to that of the plug-like members 50.

The second end portions 25b of the flexible waveguides 25 and the microwave application unit 30 may be connected in any manner as long as they are connected such that microwaves emitted by the microwave application unit 30 are transmitted into the flexible waveguides 25. For example, the second end portions 25b of the flexible waveguides 25 may be connected to the microwave application unit 30 via waveguides (not shown) whose shape is not variable, coaxial cables, or the like. The connection between the second end portions 25b of the flexible waveguides 25 and the microwave application unit 30 mentioned here may also be considered to be connection between the second end portions 25b of the flexible waveguides 25 and the microwave oscillators 300 provided in the microwave application unit 30, for example.

Note that, in the case where two or more flexible waveguides 25 are attached, in one-to-one correspondence, to two or more communication holes 111 provided in the mold 10, the microwave application unit 30 may have multiple microwave oscillators 300 that are connected, in one-to-one correspondence, to the two or more flexible waveguides 25, similarly to the above embodiments. Thus, the microwave application unit 30 may transmit microwaves emitted by the microwave oscillators 300 through the flexible waveguides that are connected to the respective microwave oscillators 300, and apply the microwaves into the cavity 100 from the two or more communication holes 111 to which the flexible waveguides 25 are attached.

Also, in the case where two or more flexible waveguides 25 are attached, in one-to-one correspondence, to two or more communication holes 111 provided in the mold 10, one microwave oscillator 300, such as a magnetron or a semiconductor oscillator, that is provided in the microwave application unit 30 may be connected to the two or more flexible waveguides 25 via a dividing unit for waveguides, such as a divider (not shown) or a distributor (not shown), or the like, similarly to the above embodiments. Thus, the microwave application unit 30 may divide each microwave emitted by the one microwave oscillator 300 to transmit the divided microwaves through the two or more flexible waveguides 25, and apply the microwaves into the cavity 100 from the two or more communication holes 111 to which the flexible waveguides 25 are attached. Note that the dividing unit and the microwave oscillator 300 may be connected directly, or may be connected via a waveguide or the like, and any kind of connection may be employed here.

Note that, for example, each microwave emitted by a microwave oscillator 300, such as a magnetron or a semiconductor oscillator, may be divided using a divider for taking out microwaves with different intensities from the input microwave, such that the divided microwaves have different intensities. Also, the phase of divided microwaves that are transmitted through the flexible waveguides 25 and applied into the cavity 100 may be differentiated by using two or more flexible waveguides 25 with different lengths that are connected to one microwave oscillator 300, such as a magnetron or a semiconductor oscillator, via a dividing unit (not shown) or the like. The phase of microwaves to be applied into the cavity 100 may be differentiated by dividing each microwave emitted by one microwave oscillator 300, such as a magnetron or a semiconductor oscillator, using a dividing unit or the like, to transmit the divided microwaves to the respective flexible waveguides 25, and further changing the phase of at least one of the divided microwaves using a waveguide type phaser or a phase controller and thereafter transmitting the microwave through the flexible waveguide 25. The intensity of the similarly divided microwaves may be differentiated by amplifying, using an amplifier, at least one of the divided microwaves and thereafter transmitting the microwave through the flexible waveguide 25. An interrupting unit capable of interrupting microwave transmission as needed may be provided in at least one of the two or more flexible waveguides 25 that are connected to one microwave oscillator 300, such as a magnetron or a semiconductor oscillator, via a dividing unit or the like, and thus, microwaves may be applied into the cavity 100 from the respective flexible waveguides 25 for different periods.

Note that, although the above description has been given of the case of using the flexible waveguides 25 in place of the coaxial cables 20 in the molding apparatus 1000 described in Embodiment 1, the flexible waveguides 25 may also be used in place of the coaxial cables 20 in the molding apparatus 2000 described in Embodiment 2.

FIG. 5B illustrates a second example of the molding apparatus according to Embodiment 3 of the present invention, and shows a cross section of a mold portion. This molding apparatus 2000a uses the flexible waveguides 25 in place of the coaxial cables 20 in the molding apparatus for performing injection molding that has been described in Embodiment 2. The method of attaching the flexible waveguides 25 to the mold 10a, the method of attaching the flexible waveguides 25 to the microwave application unit 30, and so on, are the same as those in the above-described first example, and descriptions thereof are omitted there.

In the molding apparatus using the flexible waveguides 25 in place of the coaxial cables 20 as described in the above first and second examples as well, the microwave application unit 30 may apply microwaves into the cavity 100 via the multiple flexible waveguides 25 such that microwaves within the cavity have a desired intensity distribution, similarly to Embodiments 1 and 2. Also, the microwave application unit 30 may apply microwaves, whose phase has been controlled, into the cavity 100 via the multiple flexible waveguides 25. Note that the desired intensity distribution within the cavity may be set through, for example, the shape of the cavity and the arrangement of the multiple communication holes 111, and may also be set by controlling the phase of microwaves to be applied via the multiple respective flexible waveguides 25. Microwaves in different forms of output may be applied into the cavity 100 via the multiple respective flexible waveguides 25. Microwaves may be applied into the cavity 100 via the multiple respective coaxial cables for different periods.

As described above, the molding apparatus according to the present embodiment can appropriately mold a molding material to which microwaves have been applied using a mold, by applying the microwaves into the cavity 100 via the flexible waveguides 25, similarly to the case of using the coaxial cables. Since microwaves attenuate less in the case of using the flexible waveguides than in the case of using the coaxial cables, molding can be performed with high energy efficiency.

One or more mold members constituting a mold need to be moved when molding is performed and before and after the molding. In this regard, the present embodiment uses the flexible waveguides 25 that can be flexibly bent and stretched similarly to the coaxial cables 20, as transmission paths for microwaves emitted by the microwave application unit 30. As a result, unlike the case of using waveguides whose shape is fixed and is not variable as transmission paths, when, for example, a mold member in which the communication holes 111 are provided is moved, the mold member can be moved by bending and/or stretching the flexible waveguide 25, without moving the microwave application unit 30 together with the mold member. This configuration not only increases the convenience, but also makes unnecessary, for example, a unit for moving the microwave application unit 30, thereby being able to reduce the size of the entire system including the molding apparatus.

If the molding apparatus according to the present embodiment is applied to a press molding apparatus that uses a mold as a mold for press molding, microwaves can be efficiently applied to a molding material at an appropriate distance by applying microwaves in the process of bringing mold members close to each other.

In the present embodiment as well, needless to say, the mold may have three or more communication holes, similarly to Embodiments 1 and 2. The microwave application unit 30 may have two or more microwave oscillators 300, and each of the microwave oscillators 300 may be connected, via a dividing unit or the like, to two or more flexible waveguides 25 that are connected to the communication holes 111. Some of the multiple microwave oscillators 300 may be connected, in one-to-one correspondence, to the flexible waveguides 25 such that each of the other microwave oscillators 300 is connected to two or more flexible waveguides 25 via a dividing unit or the like. In the case where the microwave application unit 30 has two or more microwave oscillators 300, and each of the microwave oscillators 300 is connected to two or more flexible waveguides 25 via a dividing unit or the like, the respective microwave oscillators 300 may emit microwaves for different periods.

Although the above embodiment has described a molding apparatus in which the flexible waveguides 25 are used as units for transmitting microwaves emitted by the microwave application unit 30, the units for transmitting microwaves emitted by the microwave application unit 30 need only be variable waveguides. The variable waveguides are waveguides that can transmit microwaves and have a microwave transmission path whose shape is variable, such as the above-described flexible waveguides 20, or sliding waveguides (not shown) having a slide mechanism for increasing and reducing the length of the waveguides, for example. The shape of a microwave transmission path being variable means that the transmission path is flexible, or is stretchable, for example. For example, the flexible waveguides 25 are flexible variable waveguides. The sliding waveguides (not shown) are variable waveguides that are stretchable. The slide mechanism in the sliding waveguides may be a tubular or cylindrical stretching mechanism and is similar to that of a zoom lens, a telescope, or the like, for example. For the sliding waveguide, see Patent Document: JP H8-288710A. By using such variable waveguides as the units for transmitting microwaves emitted by the microwave application unit 30, when, for example, a mold member in which the communication holes 111 are provided is moved, the mold member can be moved by bending and/or stretching the variable waveguides, or sliding and thus stretching or contracting the slide mechanism in the direction in which the mold member is moved, without moving the microwave application unit 30 together with the mold member, similarly to the above embodiments. This configuration not only increases the convenience, but also makes unnecessary, for example, a unit for moving the microwave application unit 30, thereby being able to reduce the size of the entire system including the molding apparatus. Note that first end portions of the variable waveguides are attached to the communication holes in the mold, and the second end portions are connected to the microwave application unit. For example, the second end portions of the variable waveguides are connected to the microwave oscillators provided in the microwave application unit. Two or more variable waveguides to be connected to the mold may alternatively be a variable waveguide that is divided by a dividing unit (not shown) such as a distributor.

Although the above embodiments have described a molding apparatus in which the coaxial cables 20 or variable waveguides such as flexible waveguides serve as the units for transmitting microwaves emitted by the microwave application unit 30, the configuration of the units for transmitting microwaves emitted by the microwave application unit 30 is not limited to the above-described configuration as long as these units are variable transmission units. The variable transmission units are, for example, units that can transmit microwaves and have microwave transmission paths whose shape is variable, such as the coaxial cables 20 or variable waveguides. The shape of the microwave transmission paths being variable means that the shape of the transmission paths is flexible or is stretchable, as already mentioned above, for example. For example, the first end portions of the variable transmission units are attached to the communication holes in the mold, and the second end portions are connected to the microwave application unit. For example, the second end portions of the variable transmission units are connected to the microwave oscillators provided in the microwave application unit.

By using such variable transmission units as the units for transmitting microwaves emitted by the microwave application unit 30, when, for example, a mold member in which the communication holes 111 are provided is moved, the mold member can be moved by bending and/or stretching the variable transmission units or sliding and thus stretching or contracting the slide mechanism in the direction in which the mold member is moved, without moving the microwave application unit 30 together with the mold member, similarly to the above embodiments. This configuration not only increases the convenience, but also makes unnecessary, for example, a unit for moving the microwave application unit 30, thereby being able to reduce the size of the entire system including the molding apparatus.

In the molding apparatus using such variable transmission units as well, the microwave application unit 30 may apply microwaves into the cavity 100 via multiple variable transmission units such that microwaves within the cavity have a desired intensity distribution, similarly to the above embodiments. Also, the microwave application unit 30 may apply microwaves, whose phase has been controlled, into the cavity 100 via the multiple variable transmission units, similarly to the above embodiments. Note that the desired intensity distribution within the cavity may be set through, for example, the shape of the cavity and the arrangement of the multiple communication holes 111, or may be set by controlling the phase of microwaves to be applied via the multiple respective variable transmission units. Microwaves in different forms of output may be applied into the cavity 100 via the multiple respective variable transmission units, similarly to the above embodiments. Microwaves may be applied into the cavity 100 via the multiple respective variable transmission units for different periods, similarly to the above embodiments.

Note that the two or more variable transmission units to be connected to the mold may alternatively be a variable transmission unit that is divided by a dividing unit (not shown) such as a distributor, similarly to the above-described coaxial cables 20, the flexible waveguides 25, and the like. At least either one of the microwaves to be transmitted to the respective divided variable transmission units may be amplified such that microwaves with different intensities are emitted, similarly to the case of the above-described coaxial cables 20 and the flexible waveguides 25. The phase of at least either one of the microwaves to be transmitted to the respective divided variable transmission units may be controlled using a phaser or the like such that microwaves with different phases are emitted into the cavity, similarly to the case of the above-described coaxial cables 20 and flexible waveguides 25. At least either one of the microwaves to be transmitted to the respective divided variable transmission units may be interrupted at a predetermined regular or irregular timing, for example, such that microwaves are applied for different periods.

Note that the variable transmission units may be configured by connecting variable transmission units with different structures (e.g. a coaxial cable and a flexible waveguide) so as to be able to transmit microwaves. Each of the variable transmission units may have a portion in which the shape of the transmission path is variable and a portion in which the shape of the transmission path is not variable. In the case of such variable transmission units, however, it is preferable that a mold member or the like in which the communication holes 111 are provided can be moved by the portion whose shape is variable being deformed (e.g. bent and/or stretched or contracted), without removing the variable transmission units. For example, a variable transmission unit obtained by connecting at least one of the coaxial cable and the variable waveguide to a transmission unit whose shape is fixed, such as a waveguide other than a variable waveguide, i.e. a waveguide whose shape is not variable, so as to be able to transmit microwaves may be considered to be the variable transmission unit that has a portion in which the shape of the transmission path is variable and a portion in which the shape of the transmission path is not variable

Although the above embodiments have been described while taking, as examples, a case where the molding apparatus is a vertical press molding apparatus and a case where the molding apparatus is a horizontal injection molding apparatus, the molding apparatus is not limited to these apparatuses and may be any apparatus that performs molding using a mold. For example, the molding apparatus may be a horizontal press molding apparatus, or may be a vertical injection molding apparatus.

The present invention is not limited to the above embodiments, and various modifications may also be made, which are, needless to say, encompassed by the scope of the present invention.

### Industrial Applicability

As described above, the molding apparatus or the like according to the present invention are suitable for a molding apparatus or the like using a mold, and are particularly useful as a molding apparatus or the like utilizing microwave application.

## Claims

1. A molding apparatus comprising:
a mold including multiple mold members that form a cavity for molding, the mold having multiple communication holes that bring outside of the mold and the cavity into communication with each other;
multiple variable transmission units for transmitting microwaves, first end portions of the multiple variable transmission units being attached to the multiple communication holes in one-to-one correspondence; and
a microwave application unit for applying microwaves into the cavity via the multiple variable transmission units, the microwave application unit being connected to second end portions of the multiple variable transmission units.

2. The molding apparatus according to claim 1,
wherein the microwave application unit applies microwaves to a molding material arranged within the cavity.

3. The molding apparatus according to claim 1 or 2,
wherein a molding material arranged within the cavity is a solid or liquid molding material, and
the microwave application unit heats the molding material by applying microwaves thereto.

4. The molding apparatus according to any one of claims 1 to 3,
wherein the microwave application unit applies microwaves into the cavity via each of the multiple variable transmission units such that microwaves within the cavity has a desired intensity distribution.

5. The molding apparatus according to any one of claims 1 to 4,
wherein the microwave application unit controls a phase of microwaves to be applied via each of the multiple variable transmission units.

6. The molding apparatus according to any one of claims 1 to 5,
wherein the microwave application unit applies microwaves with different frequencies.

7. The molding apparatus according to any one of claims 1 to 6,
wherein the microwave application unit applies microwaves in different forms of output via the multiple variable transmission units.

8. The molding apparatus according to any one of claims 1 to 7,
wherein the microwave application unit applies microwaves via the multiple variable transmission units for different periods.

9. The molding apparatus according to any one of claims 1 to 8,
wherein the multiple mold members include a movable mold and a stationary mold, and
the communication holes are provided in the movable mold.

10. The molding apparatus according to any one of claims 1 to 9,
wherein each of the multiple mold members has a shape that does not allow microwaves applied into the cavity to leak out of the mold when microwaves are applied.

11. The molding apparatus according to any one of claims 1 to 10,
wherein the microwave application unit has a semiconductor oscillator or an injection locked oscillator.

12. The molding apparatus according to any one of claims 1 to 11,
wherein the variable transmission units are coaxial cables or variable waveguides.

13. The molding apparatus according to any one of claims 1 to 11,
wherein the variable transmission units are flexible waveguides or sliding waveguides.

14. The molding apparatus according to any one of claims 1 to 13,
wherein the mold is a mold for press molding.

15. A mold that includes multiple mold members that form a cavity for molding, the mold comprising:
multiple communication holes for bringing outside of the mold and the cavity into communication with each other, multiple variable transmission units for applying microwaves into the cavity being to be attached, in one-to-one correspondence, to the multiple communication holes.

16. The mold according to claim 15,
wherein the variable transmission units to be attached to the communication holes are variable transmission units for applying microwaves to a molding material that is arranged within the cavity.

17. A method for manufacturing a molded piece, the method comprising:
a step of arranging a molding material within a cavity for molding in a mold having multiple communication holes that bring outside of the mold and the cavity into communication with each other, the mold including multiple mold members that form the cavity; and
a step of applying microwaves to a molding material arranged within the cavity in the mold, via multiple variable transmission units that are attached, in one-to-one correspondence, to the multiple communication holes in the mold.
